# EUROPEAN PATENT APPLICATION

(11) **EP 4 807 388 A1**
(43) Date of publication of application: **16.09.2026**
(21) Application number: 25199919.9
(22) Date of filing: 03.09.2025
(51) Int. Cl.: G01S 3/04, G01S 5/02

(54) **SYSTEM AND METHOD FOR DETERMINING DIRECTION OF A RADIO FREQUENCY SIGNAL**

(30) Priority: 11.03.2025 US 202519077000
(71) Applicant: Guardian Rescue, Inc., Plummer, ID 83851 (US)
(72) Inventor: McKAY, Andrew Allan Clark, LINDEN, R0A 0X1 (CA); PETTITT, Douglass Reid, PLUMMER, 83851 (US); TESSIER, Thomas Ronald, WINNIPEG, R3C 1E2 (CA)
(74) Representative: Serjeants LLP

(57) **Abstract**

One or more embodiments of the present disclosure relate to a system and method for determining direction of a radio frequency. RF signals from multiple directions may be received (404) via a plurality of phased array antennas. The received RF signals may be converted (406) into in-phase (I) and quadrature (Q) representations. The IQ representations may be decoded to extract signal characteristics. Magnitude data and phase data may be computed from the extracted signal characteristics. Signal direction vector of strongest received signal may be determined (414) by identifying peak signal strength patterns using the computed magnitude data and phase-aligned signal characteristics data. The computed signal direction vector may be rendered (416) on a user device to indicate the direction of the strongest received RF signal.

## Description

### TECHNICAL FIELD

The present disclosure relates to wireless signal localization, and in particular, relates to a system and method for determining direction of a radio frequency signal.

### BACKGROUND

Radio Direction Finding (RDF) is a well-established technique used in various fields, including aviation, maritime navigation, search and rescue, military operations, and wildlife tracking. RDF systems are designed to determine the direction of an incoming radio signal, allowing users to locate signal sources such as distress beacons, military transmitters, and lost communications equipment. The fundamental principle behind RDF is that radio signals propagate outward from a transmitter, and by analyzing the signal characteristics at different locations or angles, the direction of the transmitter can be determined. Over the years, RDF technology has evolved from simple manually operated systems to more complex automated digital solutions, yet many existing implementations continue to face significant limitations.

Traditional RDF systems primarily rely on amplitude comparison, phase comparison, or Doppler-based techniques. Amplitude comparison systems operate by measuring the strength of a received signal at different antenna positions and determining the direction where the signal is strongest. However, this method is highly susceptible to environmental interference, such as multipath reflections, atmospheric noise, and terrain obstructions, leading to inaccurate results. Phase comparison methods, on the other hand, analyze the phase difference of a received signal across multiple antennas. While this approach can improve direction-finding accuracy, it requires precise synchronization of antennas and is sensitive to phase distortions caused by signal reflections. Doppler RDF systems utilize a rotating antenna or electronically switched antennas to introduce frequency shifts, allowing for signal direction estimation based on Doppler shift analysis. These systems, however, often involve complex mechanical components, making them less reliable in harsh environments.

Another major limitation of traditional RDF systems is their reliance on manual operation. Many older RDF devices require users to rotate an antenna manually or analyze tone variations in received audio signals to determine the strongest signal direction. This process is time-consuming, labor-intensive, and prone to human error, particularly in high-stress scenarios such as search and rescue missions. Furthermore, many conventional RDF systems are designed to operate on only a single frequency band, making them ineffective for modern multi-frequency applications. In contrast, modern search and rescue beacons, such as those used in aviation and maritime distress signaling, often operate on different frequencies-406 MHz for long-range GPS-enabled distress signals and 121.5 MHz for short-range homing signals. The inability of traditional RDF systems to seamlessly transition between different frequency bands limits their effectiveness in real-world applications.

Another significant drawback of legacy RDF devices is their lack of digital signal processing (DSP) capabilities. Many analog RDF systems struggle to differentiate between legitimate signals and background noise, making it difficult to track weak or distant transmitters. Additionally, they typically lack real-time numerical or graphical displays, forcing users to rely solely on auditory cues or manual signal strength readings. This can lead to delays in signal localization and reduced operational efficiency. Moreover, many traditional RDF units are bulky, mechanically complex, and consume excessive power, making them impractical for field deployment in remote or rugged environments.

Thus, there is a need for a system and method for determining direction of a radio frequency signal that overcomes the abovementioned drawback and provides accurate, real-time direction finding.

### BRIEF SUMMARY

One or more embodiments are directed to a system and method for determining the direction of a Radio Frequency (RF) signal. RF signals are received from multiple directions using a plurality of phased-array antennas positioned to maximize signal reception and direction accuracy. The antennas may support multi-frequency operation, including 406 MHz for GPS-based detection and 121.5 MHz for homing signals. The received RF may be digitized into In-phase (I) and Quadrature (Q) representation using an Analog-to-Digital Converter (ADC), preserving the phase and magnitude characteristics for further processing. The IQ representation may be decoded to extract signal characteristics, using open-source Software-Defined Radio (SDR) software. Such a process may also generate audio output and digital signal strength readouts, helping users audibly and visually identify the strongest signal. A USB hub may be used to accommodate multiple SDR receivers, enabling simultaneous signal processing from different antennas.

Magnitude data may be computed from the extracted signal characteristics for signal strength evaluation. The total signal strength may be calculated by combining signals from multiple antennas positioned at fixed distances from each other. Additionally, phase data may be computed from the extracted signal characteristics based on time delays. By comparing phase-aligned signals from antennas, the system may determine signal alignment, which helps with accurate direction estimation. The signal direction vector of the strongest received signal may be calculated by identifying peak signal strength patterns using the computed magnitude data and determined phase alignment. The strongest signal direction may be identified by correlating peak signal strength patterns with the loudest audio output. The computed signal direction vector may be rendered on a user device using auditory output, numerical coordinates, graphical directional arrows, or augmented reality overlays, enabling users to locate the RF signal source efficiently.

An embodiment of the present disclosure relates to the system for determining the direction of a Radio Frequency (RF) signal. The system may include a receiver module to receive RF signals via a plurality of phased array antennas. The plurality of phased-array antennas may be positioned to maximize signal reception and direction accuracy. The RF signals may be received in multiple frequency bands, including 406 MHz for GPS-based detection and 121.5 MHz for homing signals.

In an embodiment, the system may include a digitization module to convert the received RF signals into In-phase (I) and Quadrature (Q) representation. The received RF signals may be converted using an Analog-to-Digital Converter (ADC).

In an embodiment, the system may include a decoding module to decode the IQ representation to extract signal characteristics, comprising frequency, modulation properties, and audio characteristics. The IQ representation may be decoded using open-source software-defined radio (SDR) software to generate an audio output and a digital signal strength readout. A USB hub may be used to accommodate the SDR receiver, enabling simultaneous processing of signals from different antennas.

In an embodiment, the system may include a computing module to compute magnitude data from the extracted signal characteristics for signal strength evaluation. The total signal strength may be computed by combining signals received via the plurality of antennas positioned at a fixed distance. Further, the computing module may compute phase data from the extracted signal characteristics based on time delays to determine phased signal alignment for direction estimation. The time delay may be determined by comparing phase-aligned signals from antennas positioned at fixed distances apart.

In an embodiment, the system can include a signal direction computation module to compute signal direction vector of the strongest received signal by identifying peak signal strength patterns using the computed magnitude data and determined phased-signal alignment. The strongest signal direction may be determined by identifying peak signal strength patterns corresponding to the loudest audio output generated via SDR.

In an embodiment, the system may include a rendering module to render the computed signal direction vector on a user device to indicate the direction of the strongest received RF signal. The signal direction vector may be rendered in a format that includes auditory output, numerical coordinates, a graphical directional arrow, and/or an augmented reality overlay.

An embodiment of the present disclosure relates to a method for determining the direction of a radio frequency signal. The method may include receiving Radio Frequency (RF) signals from multiple directions via a plurality of phased array antennas. Further, the method may include converting the received RF signals into In-phase (I) and Quadrature (Q) representations. Furthermore, the method may include decoding the IQ representation to extract signal characteristics, comprising frequency, modulation properties, and audio characteristics. Moreover, the method may include computing magnitude data from the extracted signal characteristics for signal strength evaluation. Additionally, the method may include computing phase data from the extracted signal characteristics based on time delays to determine phased signal alignment for direction estimation. In an embodiment, the method may include determining signal direction vector of strongest received signal by identifying peak signal strength patterns using the computed magnitude data and phase-aligned signal characteristics data. Further, the method may include rendering the computed signal direction vector on a user device to indicate the direction of the strongest received RF signal.

The features and advantages of the subject matter here will become more apparent in light of the following detailed description of selected embodiments, as illustrated in the accompanying **FIGURES.** As will be realized, the subject matter disclosed is capable of modifications in various respects, all without departing from the scope of the subject matter. Accordingly, the drawings and the description are to be regarded as illustrative in nature.

### BRIEF DESCRIPTION OF THE DRAWINGS

The present subject matter will now be described in detail with reference to the drawings, which are provided as illustrative examples of the subject matter so as to enable those skilled in the art to practice the subject matter. Notably, the **FIGURES** and examples are not meant to limit the scope of the present subject matter to a single embodiment, but other embodiments are possible by way of interchange of some or all of the described or illustrated elements and, further, wherein:
**FIGURE 1** illustrates an environment having a system for determining the direction of a Radio Frequency (RF) signal, in accordance with an embodiment of the present disclosure;
**FIGURE 2** illustrates an exemplary block diagram of the system for determining the direction of a Radio Frequency (RF) signal, in accordance with an embodiment of the present disclosure;
**FIGURE 3** illustrates an exemplary configuration of digital control for radio direction finding using software-defined radios, in accordance with an embodiment of the present disclosure;
**FIGURE 4** is a flowchart illustrating a method for determining the direction of a Radio Frequency (RF) signal, in accordance with an embodiment of the present disclosure; and
**FIGURE 5** is an exemplary computer unit in which or with which embodiments of the present disclosure may be utilized.

Other features of embodiments of the present disclosure will be apparent from accompanying drawings and detailed description that follows.

### DETAILED DESCRIPTION

In the following description, for purposes of explanation, numerous specific details are set forth in order to provide a thorough understanding of the present disclosure. It will be apparent, however, to one skilled in the art that the present disclosure is not limited to these specific details. In other instances, structures and devices are shown in block diagram form only in order to avoid obscuring the present technology.

The terms "connected" or "coupled" and related terms are used in an operational sense and are not necessarily limited to a direct connection or coupling. Thus, for example, two devices may be coupled directly, or via one or more intermediary media or devices. As another example, devices may be coupled in such a way that information can be passed there between, while not sharing any physical connection. Based on the disclosure provided herein, one of ordinary skill in the art will appreciate a variety of ways in which connection or coupling exists in accordance with the aforementioned definition.

If the specification states a component or feature "may", "can", "could", or "might" be included or have a characteristic, that particular component or feature is not required to be included or have the characteristic.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Embodiments of the present disclosure relate to a system and method for determining the direction of a Radio Frequency (RF) signal. The device as described herein may be a handheld device with a phased-array antennas arranged fixed distances from each other. RF signals may be received using a plurality of phased-array antennas positioned to maximize signal reception and direction accuracy. A user can point the device in different directions, and the device can identify the direction in which the RF signal appears the strongest, thereby helping the user to pinpoint the direction of origin for the RF signal. In various embodiments, a user can point the device in various directions to determine a general direction of origin for the RF signal, and then the user can continue to take measurements from different locations, thereby triangulating and identifying the exact location for the source of the RF signal. The antennas may operate on multiple frequency bands, including 406 MHz for GPS-based detection and 121.5 MHz for homing signals.

In various embodiments, the user can point the device in different directions to identify the direction of the RF signal. The system can use the directional information gathered from, for example, the 406 MHz band, to identify direction of origin of the RF signal, and that information can be incorporated into, or overlayed onto, the GPS system. The user can then move to a second location and collect additional readings indicating the direction of the RF signal from the second location. The user can continue to move through the environment pointing the device in different directions, thereby collecting data about direction of the origin of the RF signal from the user's various locations. As the user continues to move through the environment and point the device in various directions, the system can use the information about the direction of the RF signal collected from the various locations to triangulate the location of the RF signal. The system can incorporate the information about the location of the RF signal into, or overlay the location of the signal onto, the GPS system so that the user can more quickly identify and go to the source of the RF signal.

The received RF signals may be digitized into In-phase (I) and Quadrature (Q) representation using an Analog-to-Digital Converter (ADC). The IQ representation may be decoded to extract signal characteristics, such as frequency, modulation properties, audio content, and/or digitally encoded data, using open-source, software-defined radio (SDR) software. The decoding process may also produce audio output and digital signal strength readouts, allowing users to audibly and visually detect the strongest signal. A USB hub may be used to support multiple SDR receivers, enabling the simultaneous processing of signals from different antennas. Magnitude data may be computed from the extracted signal characteristics for signal strength evaluation. The total signal strength may be calculated by combining signals from antennas positioned on the handheld device at fixed distances from each other. In various embodiments, the distance between antennas can be determined by the lowest frequency the device is configured to receive. In various embodiments, the distance between the front antennas and the back antennas on the portable device can be a certain fraction of the wavelength of the lowest frequency the device is configured to receive.

Additionally, phase data may be computed based on time delays between phase-aligned signals, allowing the system to determine signal alignment for accurate direction estimation. The signal direction vector of the strongest received signal may be determined by identifying peak signal strength patterns using the computed magnitude data and phase alignment. The direction vector may be rendered on a user device as auditory output, numerical coordinates, graphical arrows, or augmented reality overlays, helping users efficiently locate the RF signal source.

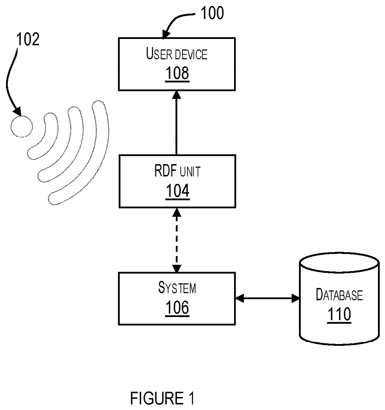

**FIGURE 1** illustrates an environment **100** having a system **106** for determining the direction of a Radio Frequency (RF) signal, in accordance with an embodiment of the present disclosure. In an embodiment, the environment **100** may include RF signal(s) **102,** a Radio Direction Finding (RDF) unit **104,** a system **106,** a user device **108,** and a database **110.** The RF signal(s) **102** may be emitted by various sources, such as emergency beacons, distress signals, aviation transmitters, or communication devices. The RF signal(s) **102** may propagate through the environment and be detected by the RDF unit **104.** The RDF unit **104** may serve as the primary hardware component responsible for receiving, analyzing, and determining the direction of the incoming RF signals before transmitting the processed information to the system **106** for further evaluation and storage in the database **110.**

In various embodiments, the system **106** may be implemented as a local computing device, an embedded processor within the RDF unit **104,** or a cloud-based processing system. The system **106** may apply advanced algorithms, machine learning models, or statistical analysis techniques to improve signal accuracy, remove noise, and optimize direction computation. The system **106** may interface with external hardware, such as search and rescue control centers, aircraft navigation systems, or mobile devices, enabling seamless data exchange.

In an embodiment, the RDF unit **104** may be a portable, self-contained device designed to detect and locate the source of RF transmissions. The RDF unit **104** may include a plurality of phased-array antennas, a signal reception and processing system, a metallic enclosure for shielding, and a user device **108** for data visualization and interaction. The RDF unit **104** may operate across multiple frequency bands, including 406 MHz for GPS-based emergency beacon detection and 121.5 MHz for short-range homing operations.

In an embodiment, the RDF unit **104** may receive RF signals using multiple antennas arranged in a phased-array configuration. The placement of the antennas may be optimized to detect phase differences and magnitude variations in received signals, enabling accurate computation of the transmission source's direction. The RDF unit **104** may include software-defined radio (SDR) technology to process RF signals digitally and extract relevant characteristics such as signal strength, frequency, modulation properties, audio content, and/or digitally encoded data. In an embodiment, the RDF unit **104** may house a USB hub designed to accommodate multiple SDR receivers, enabling simultaneous reception and processing of signals from different antennas. The USB hub may facilitate high-speed data transfer to an internal computing module, which may execute signal processing algorithms to refine the computed direction. The RDF unit **104** may be capable of determining the strongest signal direction by analyzing signal alignment, magnitude data, and frequency characteristics. The RDF unit **104** may also integrate a control interface, allowing users to adjust operating frequency, signal gain, and audio volume as needed.

In an embodiment, the multiple antennas arranged in a phased-array configuration may be spaced at one-eighth of the wavelength for the frequency that they are tuned to receive. The signals from these antennas may be combined using analog circuits prior to being digitized into In-phase (I) and Quadrature (Q) representation using an Analog-to-Digital Converter (ADC).

In an embodiment, the multiple antennas arranged in a phased-array configuration may consist of a front and rear dipole antenna located at fixed points on the enclosure of the device. The device may include multiple sets of phased-array dipoles to allow for the optimal reception of signals in multiple frequency bands.

In an embodiment, each half of the dipole antenna may be located on opposing sides of the enclosure with a radio frequency (RF) connector to allow the attachment and removal of antenna elements for transportation and storage.

In an embodiment, the RDF unit **104** may be enclosed in a robust metallic case, which may serve multiple purposes, including physical durability, RF shielding, and minimizing interference from internal electronic components. The enclosure may feature a rigid handheld grip for field operation and a mounting slot for the user device **108,** which may function as a graphical interface and GPS mapping system. In various embodiments, the RDF unit **104** may include a front display panel, providing real-time numerical readouts of signal strength and direction.

In an embodiment, the RDF unit **104** may facilitate dual-frequency reception capabilities, allowing it to switch between multiple frequency bands for enhanced search and rescue efficiency. The system **106** may transition from 406 MHz GPS tracking to 121.5 MHz homing mode when within a predefined range of the signal source.

In an embodiment, the user device **108** may be a mobile device, such as a smartphone, tablet, handheld computing device, or a specialized portable receiver. The user device **108** may serve as an interactive interface, facilitating users to visualize signal direction data, control system functions, and receive real-time feedback from the RDF unit **104.** In an embodiment, the user device **108** may wirelessly connect to the RDF unit **104** via Bluetooth, Wi-Fi, or cellular networks, allowing real-time data transmission without physical cables. In an alternate embodiment, the user device **108** may interface with the RDF unit **104** through a wired USB or serial connection, ensuring a stable and high-speed communication link.

In an embodiment, the database **110** may be used to store historical signal data, computed direction vectors, frequency logs, and user activity records. The database **110** may ensure that previously detected RF transmissions can be analyzed for pattern recognition, trajectory tracking, and post-mission evaluation. Further, the database **110** may store raw IQ data, extracted modulation properties, and decoded audio signals for future reference. The stored data may be used to compare past and present signal characteristics, allowing users to identify whether a beacon's transmission strength is fluctuating due to battery depletion, environmental interference, or movement of the signal source. Furthermore, the database **110** may also support automated report generation, enabling search teams to retrieve mission summaries and generate analytical insights from recorded signal direction data.

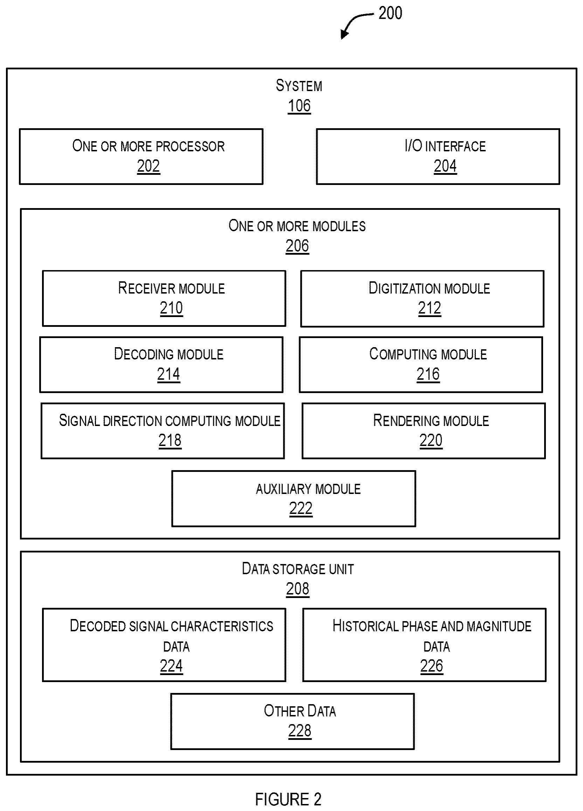

**FIGURE 2** illustrates an exemplary block diagram **200** of the system **106** for determining the direction of a Radio Frequency (RF) signal, in accordance with an embodiment of the present disclosure. In an embodiment, the system **106** may include one or more processors **202,** an Input/Output (I/O) interface **204,** one or more modules **206,** and a data storage unit **208.** The one or more processors **202** may be implemented as one or more microprocessors, microcomputers, digital signal processors, central processing units, state machines, logic circuitries, and/or any devices that manipulate signals based on operational instructions. Further, the I/O interface **204** may serve as the pivotal bridge connecting the internal processes of the system **106** with its external environment for facilitating the exchange of information between the system **106** and its users or external devices. Furthermore, the I/O interface **204** may contribute to the user experience by providing intuitive means for input, such as through keyboards or touchscreens, and presenting meaningful output via displays or other output devices. The one or more processors **202** may include one or more modules **206.** In an embodiment, the one or more modules **206** may include a receiver module **210,** a digitization module **212,** a decoding module **214,** a computing module **216,** a signal direction computing module **218,** a rendering module **220,** and any other modules **222** essential or required for the working of the system **106.** In an embodiment, the data storage unit **208** may include decoded signal characteristics data **224,** historical phase and magnitude data **226,** and any other data **228** required for the working of the system **106.** In an embodiment of the present disclosure, the one or more processors **202** and the data storage unit **208** may form a part of a chipset installed in the system **106.** In another embodiment of the present disclosure, the data storage unit **208** may be implemented as a static memory or a dynamic memory. For example, the data storage unit **208** may be internal to the system **106,** such as an onside-based storage. In another example, the data storage unit **208** may be external to the system **106,** such as cloud-based storage. Further, the one or more module **206** may be communicatively coupled to the data storage unit **208** and the one or more processor **202** of the system **106.** The one or more processors **202** may be configured to control the operations of the one or more modules **206.**

In an embodiment, the receiver module **210** may receive RF signals from multiple directions via a plurality of phased array antennas. The plurality of phased-array antennas may be positioned to maximize signal reception and direction accuracy. The RF signals may be received in multiple frequency bands, including 406 MHz that may be used for GPS-based detection and 121.5 MHz that may be used for homing signals.

In an embodiment, the plurality of phased-array antennas may be strategically positioned to optimize signal reception and improve direction-finding accuracy. The receiver module **210** may be capable of receiving signals from multiple frequency bands to support various applications, including search and rescue operations, aviation distress tracking, and emergency beacon detection. In an embodiment, the receiver module **210** may receive RF signals in multiple frequency bands, including 406 MHz and 121.5 MHz. The 406 MHz band may be utilized for GPS-based detection, allowing the system **106** to locate emergency beacons transmitting GPS coordinates over long distances. Once an initial location is identified using the 406 MHz signal, the receiver module **210** may be transitioned to detecting 121.5 MHz homing signals, which may provide a more localized means of tracking the beacon within a close range. In an embodiment, the receiver module **210** may receive signals in both frequency bands and facilitate seamless operation in search and rescue missions, allowing users to track distress beacons with high accuracy.

In an embodiment, the receiver module **210** may include a configuration where additional frequency bands beyond 406 MHz and 121.5 MHz may be supported, such as 243 MHz, which may be used for military applications, or 216-218 MHz, which may be utilized for specialized tracking systems like Project Lifesaver. The phased-array antennas may allow for additional frequency reception while maintaining optimal direction-finding performance. In this embodiment, the receiver module **210** may dynamically adjust its reception parameters based on the detected signal frequency, optimizing sensitivity for different operational scenarios.

In an embodiment, the receiver module **210** may employ shielding techniques to minimize interference and improve signal clarity. A metal enclosure may surround the receiver module **210** and may act as a radio frequency (RF) shield, reducing external noise and preventing signal distortion caused by electromagnetic interference. Additionally, the receiver module **210** may include internal shielding between the antennas and processing components to further isolate the received signals from internally generated noise.

In an embodiment, the receiver module **210** may utilize two primary antennas positioned at the front and two additional antennas positioned at the back to receive RF signals 102 from multiple directions. The placement of the antennas may facilitate maximizing signal reception and coverage, ensuring that incoming transmissions are detected efficiently. The antennas may be spaced at a fixed distance to enable the reception of signals with minimal interference and optimal gain, improving the overall sensitivity of the system **106.**

In an embodiment, the receiver module **210** may be integrated with a USB hub for high-speed data communication with multiple software-defined radios (SDRs). The USB hub may facilitate simultaneous reception of signals from multiple antennas, ensuring continuous signal processing and reducing latency in direction computation. In an embodiment, the receiver module **210** may selectively power specific SDRs to conserve energy and reduce heat generation when operating in a low-power mode.

In an embodiment, the receiver module **210** may include a rigid mounting structure for antennas to maintain precise alignment, ensuring consistent signal reception and phase accuracy. The placement of antennas may be determined based on the lowest frequency received to optimize wavelength accommodation and improve system **106** efficiency. In an embodiment, the receiver module **210** may be integrated with an external user(computing) device **108,** such as a smartphone or tablet, allowing remote access to the received signals and enhancing operational flexibility in field deployments.

In an embodiment, a digitization module **212** may convert received RF signals **102** into an in-phase (I) and quadrature (Q) representation. The received RF signals may be converted using an analog-to-digital converter (ADC). The ADC may process the analog RF signals and generate corresponding digital signals for further processing. The in-phase and quadrature components may preserve the phase and amplitude characteristics of the received RF signal **102,** allowing subsequent modules to analyze the signal strength, modulation properties, and directional alignment with high precision. In an embodiment, the ADC may operate at a high sampling rate to ensure an accurate digital representation of the received RF signals. The sampling rate may be selected based on the highest frequency component of the incoming signal, preventing aliasing and maintaining signal integrity. The ADC may work in conjunction with a software-defined radio (SDR) system, which may perform digital downconversion and filtering to refine the in-phase and quadrature components for further analysis. The digitized IQ representation may be transmitted to subsequent processing modules for decoding and signal direction computation.

In an embodiment, the digitization module **212** may utilize multiple ADCs operating in parallel to process signals from different antennas simultaneously. Such configuration may improve system **106** responsiveness by ensuring that phase-aligned signals from multiple reception points are digitized in real time. The parallel ADC architecture may also enhance the system's ability to track multiple RF sources concurrently, making it suitable for complex signal environments. In an embodiment, the digitization module **212** may include Automatic Gain Control (AGC) mechanisms to optimize signal levels before digitization. The AGC may dynamically adjust the input signal amplitude to ensure that the ADC operates within its optimal range, preventing signal clipping or degradation. This may improve the accuracy of the digitized IQ representation, especially in scenarios where the received signal strength fluctuates due to environmental factors or varying transmission power.

In an embodiment, the digitization module **212** may interface with a high-speed USB hub. The USB hub may support multiple SDR receivers, allowing digitized IQ data to be streamed in real time for analysis.

In an embodiment, the decoding module **214** may decode the in-phase (I) and quadrature (Q) representation to extract signal characteristics, including frequency, modulation properties, audio characteristics, and/or digitally encoded data. The IQ representation may be processed using digital signal processing techniques to analyze the phase and amplitude variations within the RF signal **102.** The analysis may facilitate the system **106** to determine key transmission parameters, such as the operating frequency of the detected signal, the modulation scheme used for encoding data, and the presence of an audio signal within the transmission.

In an embodiment, the decoding module **214** may utilize open-source, software-defined radio (SDR) software to decode the IQ representation. The SDR software may apply various demodulation techniques to reconstruct the original transmitted signal from the digitized IQ data. The decoded signal may then be analyzed to generate a digital signal strength readout, providing a numerical representation of the detected signal's power level. Further, the SDR software may extract audio components from the transmission, allowing the user to hear the received signal through an integrated speaker or headphone output. Such features may be particularly useful in applications where voice or beacon tones are embedded within the RF transmission.

In an embodiment, the decoding module **214** may apply automatic frequency detection to identify the frequency of incoming transmissions without requiring manual input. Such feature may facilitate the system **106** to scan multiple frequency bands and automatically adjust its demodulation parameters based on the detected signal type. The automatic frequency detection capability may improve efficiency in search and rescue missions by quickly identifying emergency beacon transmissions on 406 MHz or 121.5 MHz without user intervention.

In an embodiment, a USB hub may be integrated into the system **106** to accommodate multiple SDR receivers, enabling simultaneous processing of signals from different antennas. The USB hub may facilitate high-speed data transfer between the SDR receivers and the processing unit, ensuring that multiple signal sources are decoded in real time.

In an embodiment, the decoding module **214** may support multiple demodulation schemes, facilitating the system **106** to decode a wide range of RF transmissions. This capability may include support for amplitude modulation (AM), frequency modulation (FM), and digital modulation formats such as phase-shift keying (PSK), frequency-shift keying (FSK), amplitude-shift keying (ASK), and/or quadrature amplitude modulation (QAM). The ability to decode multiple modulation types may increase the system **106** versatility, making it suitable for detecting various types of distress signals, emergency beacons, and communication signals.

In an embodiment, the decoding module **214** may interface with external computing devices via the USB hub, allowing decoded signal data to be transmitted to a remote monitoring system or displayed on an external screen. In an embodiment, the decoded signal characteristics data **224,** including frequency, modulation properties, and signal strength, may be stored, in the database **110,** for historical analysis. The decoded signal characteristics data **224** may be utilized to track variations in signal power over time, assisting in search and rescue operations by determining whether a beacon's transmission strength is fluctuating due to environmental factors or battery depletion.

In an embodiment, the computing module **216** may compute magnitude data from the extracted signal characteristics for signal strength evaluation. The total signal strength may be computed by combining signals received via the plurality of antennas positioned at a fixed distance. Further, the computing module **216** may compute phase data from the extracted signal characteristics based on time delays to determine phased signal alignment for direction estimation. The time delay is determined by comparing phase-aligned signals from antennas positioned at fixed distances.

In an embodiment, the total signal strength may be computed by combining signals received from multiple antennas positioned at fixed distances. The plurality of antennas may be arranged in a phased-array configuration, where signals received from different positions may be processed together to enhance signal detection accuracy. The signal combination may be achieved through timing synchronization, ensuring that signals from different antennas align correctly before being summed. Such process may improve direction-finding precision by increasing the magnitude of signals arriving from the strongest direction while minimizing the influence of weaker or off-axis signals. In an embodiment, the computing module **216** may apply signal weighting techniques before computing the total signal strength. This may involve assigning different weight values to signals based on their phase alignment and amplitude variations, optimizing the contribution of each received signal in determining the strongest transmission direction.

In an embodiment, the computing module **216** may compute phase data from the extracted signal characteristics and determine signal alignment based on time delays. Phase data computation may include analyzing the relative phase shift of received signals to determine the arrival angle of the RF transmission. By comparing the phase relationship between signals received at different antennas, the system **106** may estimate the direction from which the signal originated. In an embodiment, the time delay between received signals may be determined by comparing phase-aligned signals from antennas positioned at fixed distances. The fixed spacing between antennas may introduce measurable time differences in signal reception, depending on Angle of Arrival (AOA) of the RF transmission. The time delays may be used to refine the system's direction estimation by aligning signals before magnitude computation. In an embodiment, the computation module **216** may utilize the two primary antennas positioned at the front and the two additional antennas positioned at the back to determine the time delay and phase difference between received signals. The fixed distance between the antennas may facilitate the system **106** to compare the arrival time of the RF signals, enabling precise phase alignment. Such alignment may be essential for computing the relative phase shift, which contributes to determining the angle of arrival of the signal source.

In an embodiment, the computing module **216** may dynamically adjust the time delay calculations based on environmental factors, such as multipath interference and signal reflections. By adapting to real-time variations in signal propagation, the system may improve accuracy in urban environments or areas with high RF interference.

In an embodiment, the computing module **216** may store historical phase and magnitude data **226** to refine direction-finding calculations over time. By analyzing previously computed signal characteristics, the system may apply statistical averaging to reduce noise and improve the reliability of computed signal directions.

In an embodiment, the signal direction computation module **218** may compute signal direction vector of strongest received signal by identifying peak signal strength patterns using the computed magnitude data and determined phased-signal alignment. The strongest signal direction is determined by identifying peak signal strength patterns corresponding to the loudest audio output generated via SDR. In an embodiment, the computed direction vector may represent the estimated bearing of the RF transmission source, allowing for precise localization of the signal origin.

In an embodiment, the strongest signal direction may be determined by detecting peak signal strength patterns that correspond to the highest received power levels. The system **106** may scan across multiple antenna reception points, evaluating magnitude fluctuations to identify the optimal alignment with the source transmission. The computation process may ensure that only the strongest and most reliable signal peaks are considered, minimizing the impact of noise and reflections that could lead to incorrect direction estimation.

In an embodiment, the signal direction computation module **218** may analyze signals received from the front and back antennas to identify peak signal strength patterns. By comparing the combined signals from both sets of antennas, the system **106** may enhance directional accuracy, allowing it to detect the strongest received RF signal. The fixed placement of the antennas relative to each other on the mobile device may ensure that the computed signal direction is consistent, reducing the likelihood of errors caused by multipath interference or environmental noise.

In an embodiment, the strongest signal direction may be validated using audio output generated via the SDR software. The SDR-based decoding process may extract an audio signal from the received transmission, allowing users to audibly confirm when the signal is at its peak strength. The system **106** may synchronize numerical signal strength readings with audible output intensity, ensuring that the loudest detected audio corresponds with the computed direction vector. Such feature may be particularly useful in search and rescue operations, where operators rely on both visual readouts and auditory feedback to efficiently locate emergency beacons.

In an embodiment, the signal direction computation module **218** may include adaptive thresholding, where the system **106** dynamically adjusts its sensitivity to signal peaks based on the surrounding RF environment. In high-interference conditions, the system **106** may filter out spurious peaks caused by reflections, while in low-signal environments, it may increase sensitivity to detect weaker transmissions accurately.

In an embodiment, a rendering module **220** may render the computed signal direction vector on the user device **108,** providing a visual and/or auditory representation of the strongest received RF signal **102** direction. The rendered output may assist the users in efficiently locating the signal source by displaying direction information in a clear and interpretable format. In an embodiment, the signal direction vector may be rendered in multiple formats, including auditory output, numerical coordinates, a graphical directional arrow, and/or an augmented reality (AR) overlay. The rendering format may be user-configurable, allowing for adaptation to different operational environments and user preferences.

In an embodiment, auditory output may be used to provide real-time feedback on the strongest signal direction. The rendering module **220** may generate tone variations, beeping patterns, or speech-based cues to indicate proximity and direction. For example, a gradually increasing tone frequency may signify that the user is approaching the signal source, while a decreasing tone may indicate movement away from it. Such auditory guidance may be particularly beneficial in search and rescue operations, where visual attention may be focused elsewhere, such as during nighttime searches or high-stress emergency scenarios.

In an embodiment, the computed direction vector may be rendered as numerical coordinates, displaying azimuth and elevation angles corresponding to the strongest received signal. The numerical representation may allow for precise direction tracking, enabling operators to log exact signal bearings for further analysis or recordkeeping. The numerical format may also be integrated with GPS-based mapping mechanisms, facilitating the users to correlate direction readings with their geographical location. In an embodiment, a graphical directional arrow may be displayed on interface of the user device **108.** The arrow may dynamically update in real time, adjusting its orientation as the detected signal direction changes. The graphical representation may enhance usability by providing an intuitive, easy-to-understand indicator of where the signal is originating. The directional arrow may also include color-coded intensity indicators, where stronger signals appear in brighter or more distinct colors to emphasize peak reception.

In an embodiment, the rendering module **220** may generate an augmented reality (AR) overlay, superimposing the signal direction vector onto a live camera feed from the user's mobile device or AR-equipped headset. The AR overlay may facilitate the users to visually align their field of view with the estimated signal source, making it easier to navigate toward the target in real-world scenarios. Such feature may particularly be useful in outdoor search and rescue missions, where visual alignment with terrain features is necessary for efficient tracking.

In an embodiment, the rendering module **220** may provide customizable user settings, enabling operators to switch between different rendering modes based on their preferences and mission requirements. In an embodiment, the rendering module **220** may interface with external computing devices, such as smartphones, tablets, or dedicated RDF terminals, allowing the rendered signal direction to be displayed on multiple platforms. Such capability may optimize collaboration in multi-user search operations, where multiple personnel needs access to the same direction-finding data in real time.

In an embodiment, the auxiliary module **222** may include modules that may enhance the functionality, adaptability, and efficiency of the system **106.** The auxiliary module **222** may complement the primary components by improving signal processing, refining direction estimation, optimizing power consumption, and expanding system **106** compatibility with external devices. The integration of the auxiliary module **222** may enable the system **106** to operate effectively in diverse environments, including search and rescue missions, military applications, aviation distress tracking, and emergency communication monitoring.

In an embodiment, the auxiliary module 222 may include a signal filtering module to reduce noise and improve signal clarity before processing. The signal filtering module may apply band-pass filters, low-pass filters, or adaptive digital filtering techniques to remove unwanted RF interference and background noise. The signal filtering module may facilitate the system **106** ability to detect weak signals in congested RF environments, improving accuracy in scenarios where multiple transmissions are present within the same frequency band. In an embodiment, the auxiliary module may include a power management module to optimize energy consumption and system **106** efficiency. The power management module may dynamically control power distribution by selectively activating or deactivating specific components based on operational requirements. For example, in low-power mode, the system **106** may disable unnecessary SDR receivers, reducing overall energy consumption while maintaining essential functionality. The power management module may monitor battery levels and automatically adjust processing intensity to prolong operational runtime in field deployments. In an embodiment, the auxiliary module 222 may include a connectivity module, facilitating integration with external computing devices via wired or wireless communication. The connectivity module may support USB, Bluetooth, Wi-Fi, or satellite communication interfaces, allowing real-time data transmission to external monitoring stations, mobile devices, or networked search teams. The communication ability may enable the system **106** to share signal direction data across multiple platforms and may enhance coordination in multi-operator search and rescue operations. In an embodiment, the integration of these additional modules may significantly improve the overall functionality, adaptability, and efficiency of the system, ensuring it remains effective in a wide range of real-world applications.

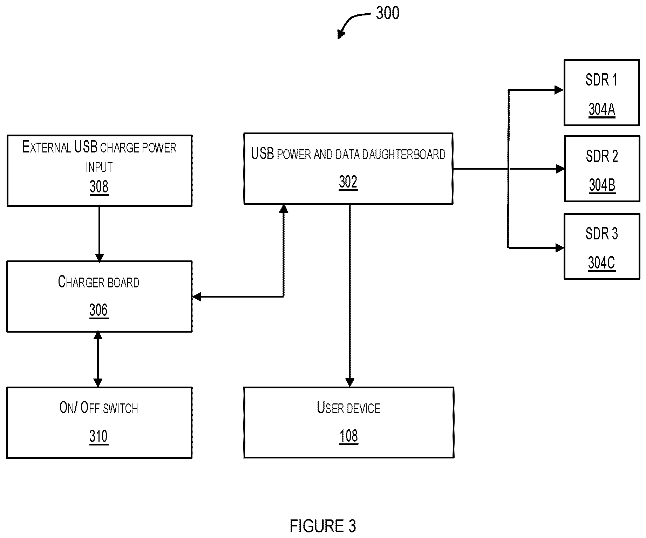

**FIGURE 3** illustrates an exemplary configuration **300** of digital control for radio direction finding using software-defined radios, in accordance with an embodiment of the present disclosure. In an embodiment, the RDF digital control of SDRs may include a USB power and data daughterboard **302** to facilitate the operation of multiple Software-Defined Radios (SDRs), enabling efficient and flexible signal reception. The USB power and data daughterboard **302** may individually power up one, two, or three or more connected SDRs, including SDR1 **304A,** SDR2 **304B,** and SDR3 **304C.** The selective activation may depend on operational needs, facilitating the system **106** to optimize power usage and minimize RF interference that might otherwise occur when multiple SDRs operate simultaneously.

In an embodiment, the USB power and data daughterboard **302** may be connected to an upstream port, enabling communication with an external computing device or an embedded microcontroller inside the RDF unit **104.** The controller connected to the upstream port may be a dedicated Linux-based embedded computer within the RDF unit **104** or an external computing device such as a smartphone, tablet, or remote-control station. The control mechanism may utilize open-source, non-proprietary SDR software to manage the SDRs and decode RF signals for further processing.

In an embodiment, the USB power and data daughterboard **302** may be coupled to the user device **108.** The user device **108** may serve as the graphical user interface (GUI) for displaying signal direction vectors, signal strength values, and real-time navigation information. The connection may support high-speed data transmission, ensuring that the computed signal direction and strength data are displayed with minimal latency.

In an embodiment, the USB power and data daughterboard **302** may be coupled to a charger board **306.** The charger board **306** may facilitate power management and charging functionality for the RDF unit **104.** The charger board **306** may be connected to an external USB charge power input **308,** allowing the RDF unit **104** to be powered by external power sources, rechargeable batteries, or direct USB power. Additionally, the charger board **306** may be coupled to an on/off switch **310,** providing users with manual control over the power state of the system **106.**

In an embodiment, the USB power and data daughterboard **302** may include a dedicated port connected to an onboard USB-to-UART serial converter, providing an interface for an external microcontroller that does not have native USB connectivity. Such configuration may reduce hardware complexity and size requirements by eliminating the need for additional USB wiring and ports. The port may facilitate seamless communication between the external microcontroller and the system **106,** enabling integration with additional processing units or specialized control interfaces.

In an embodiment, the USB power and data daughterboard **302** may feature a 10-pin control interface header connector, which may provide 5V and optionally 3V power for connected components. The header may also allow direct control of specific USB channels, enabling selective power management of connected SDRs. Such flexibility in power control may improve the efficiency of the system **106** by ensuring that only the necessary SDR receivers are active, reducing energy consumption and minimizing unnecessary data processing loads.

In an embodiment, the USB power and data daughterboard **302** may be integrated with an ARM-based microcomputer running a Linux operating system, which may serve as the central control unit for the RDF system. The single-board computer may include multiple communication interfaces, such as I2C, SPI, USB, analog-to-digital converters, and digital I/O ports, allowing seamless integration with the SDR receivers and other system **106** components. The embedded Linux environment may support real-time SDR control, signal decoding, and data conversion for digital power level display and audio signal output.

In an embodiment, the USB power and data daughterboard **302** may prioritize dimensional efficiency, reducing the overall footprint of the system **106** while ensuring high-speed data transfer. The daughterboard may support USB 2.0 compliance with high-speed data transmission of up to 480 megabits per second per port, allowing multiple SDRs to process RF signals simultaneously with minimal latency. In various embodiments, various internal and/or external connections providing communication between components of the device may be directly wired connections, connections through various ports including USB, and/or wireless connections including Bluetooth or other forms of wireless communications. It should be clear that throughout this description and throughout various parts of the described device, various internal and/or external connections providing communications between components are possible, and are not intended to be limited to any particular type of connection or communication medium.

In an embodiment, the USB power and data daughterboard **302** may support dual power input options, allowing the RDF unit **104** to be powered through external power sources, rechargeable batteries, or a direct USB connection. The flexibility in power input may ensure uninterrupted operation across various field environments, including search and rescue missions, military deployments, and aviation distress tracking. Further, the USB power and data daughterboard **302** may manage the flow of USB communication between SDR receivers, microcontrollers, and external computing devices. Furthermore, in an embodiment, the USB power and data daughterboard **302** may include a high-speed USB hub designed to route signal data efficiently, minimizing processing delays and ensuring real-time direction computation. The USB hub may facilitate simultaneous data streaming from multiple SDRs, enabling the RDF system **106** to track multiple RF signals concurrently.

In an embodiment, the USB power and data daughterboard **302** may incorporate a power regulation module that distributes power efficiently among different system **106** components. The power regulation mechanism may include voltage converters and current limiters to prevent overloading or overheating of sensitive electronics. The mechanism may also prioritize power allocation, ensuring that critical components, such as SDR receivers and the embedded microcontroller, receive stable power during operation.

In an embodiment, the USB power and data daughterboard **302** may support intelligent power management, allowing users to monitor battery levels, optimize power consumption, and extend operational runtime. Further, the USB power and data daughterboard **302** may include a charging indicator, providing real-time feedback on power status and battery health. Additionally, the charger may support fast-charging capabilities, reducing downtime between missions.

In an embodiment, the USB power and data daughterboard **302** data distribution mechanism may feature an interface for remote connectivity, allowing external computing devices, smartphones, or control centers to access RDF signal data wirelessly. Such capability may enhance multi-user collaboration and remote tracking in large-scale search operations.

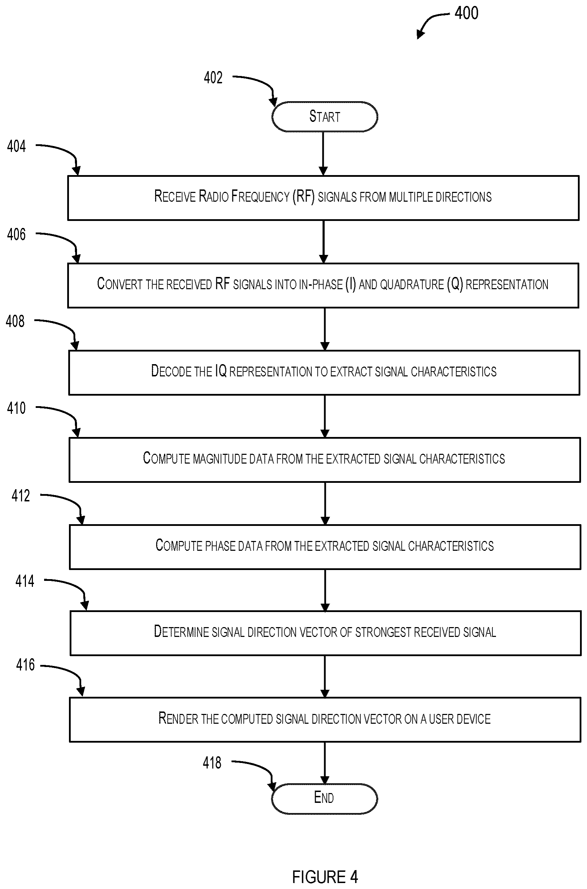

**FIGURE 4** is a flowchart **400** illustrating a method for determining the direction of a Radio Frequency (RF) signal, in accordance with an embodiment of the present disclosure. The method starts at step **402.**

At step **404,** the method may include receiving RF signals from multiple directions via a plurality of phased array antennas. The plurality of phased-array antennas may be positioned to maximize signal reception and direction accuracy. The RF signals may be received in multiple frequency bands, including 406 MHz for GPS-based detection and 121.5 MHz for homing signals.

At step **406,** the method may include converting the received RF signals into in-phase (I) and quadrature (Q) representations. The received RF signals are converted using an analog-to-digital converter (ADC).

At step **408,** the method may include decoding the IQ representation to extract signal characteristics, comprising frequency, modulation properties, and audio characteristics. The IQ representation may be decoded using open-source, software-defined radio (SDR) software to generate an audio output and a digital signal strength readout. A USB hub may be utilized to accommodate the SDR receiver, enabling simultaneous processing of signals from different antennas.

At step **410,** the method may include computing magnitude data from the extracted signal characteristics for signal strength evaluation. The total signal strength may be computed by combining signals received via the plurality of antennas positioned at a fixed distance. At step **412,** the method may include computing phase data from the extracted signal characteristics based on time delays to determine phased signal alignment for direction estimation. The time delay may be determined by comparing phase-aligned signals from antennas positioned at fixed distances.

At step **414,** the method may include computing signal direction vector of strongest received signal by identifying peak signal strength patterns using the computed magnitude data and determined phased-signal alignment. The strongest signal direction may be determined by identifying peak signal strength patterns corresponding to the loudest audio output generated via SDR.

At step **416,** the method may include rendering the computed signal direction vector on a user device to indicate the direction of the strongest received RF signal. The signal direction vector may be rendered in a format including auditory output, numerical coordinates, a graphical directional arrow, and/or an augmented reality overlay. The method ends at **418.**

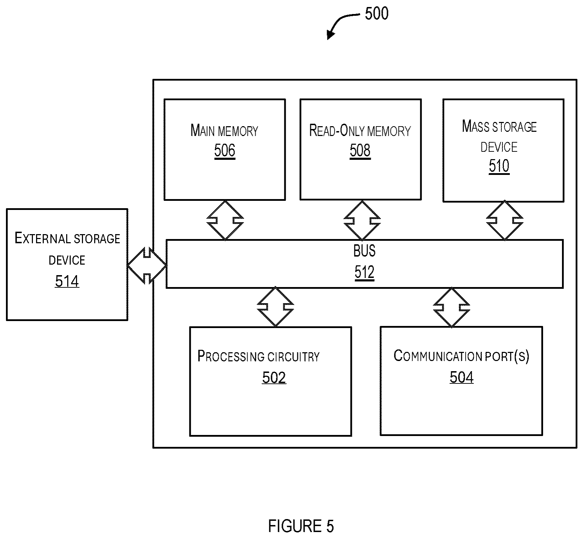

**FIGURE 5** illustrates an exemplary computer system **500** in which or with which embodiments of the present disclosure may be utilized. As shown in **FIGURE 5****,** a computer system **500** includes an external storage device **514,** a bus **512,** a main memory **506,** a read-only memory **508,** a mass storage device **510,** a communication port **504,** and a processor **502.**

Those skilled in the art will appreciate that computer system **500** may include more than one processor **502** and communication ports **504.** The processor **502** may include various modules associated with embodiments of the present disclosure.

The communication port **504** can be any of an RS-232 port for use with a modem-based dialup connection, a 10/100 Ethernet port, a Gigabit or 10 Gigabit port using copper or fiber, a serial port, a parallel port, or other existing or future ports. The communication port 504 can include various wired or wireless communications, including Bluetooth, WIFI, or others. The communication port **504** may be chosen depending on a network, such as a Local Area Network (LAN), Wide Area Network (WAN), or any network to which the computer system connects.

The memory **506** can be Random Access Memory (RAM), or any other dynamic storage device commonly known in the art. Read-Only Memory 808 can be any static storage device(s) e.g., but not limited to, a Programmable Read-Only Memory (PROM) chip for storing static information e.g., start-up or BIOS instructions for processor **502.**

The mass storage **510** may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces).

The bus **512** communicatively couples processor(s) **502** with the other memory, storage, and communication blocks. The bus **512** can be, e.g., a Peripheral Component Interconnect (PCI) / PCI Extended (PCI-X) bus, Small Computer System Interface (SCSI), USB, or the like, for connecting expansion cards, drives, and other subsystems as well as other buses, such a front side bus (FSB), which connects processor **502** to a software system.

Optionally, operator and administrative interfaces, e.g., a display, keyboard, and a cursor control device, may also be coupled to bus **512** to support direct operator interaction with the computer system. Other operator and administrative interfaces can be provided through network connections connected through communication port **504.** An external storage device **514** can be any kind of external hard-drives, floppy drives, IOMEGA^{®} Zip Drives, Compact Disc - Read-Only Memory (CD-ROM), Compact Disc - Re-Writable (CD-RW), Digital Video Disk - Read Only Memory (DVD-ROM). The components described above are meant only to exemplify various possibilities. In no way should the aforementioned exemplary computer system limit the scope of the present disclosure.

One or more embodiments of the present disclosure relate to a system and method (together termed as a mechanism) for determining the direction of a radio frequency (RF) signal. The mechanism enhances signal localization accuracy for applications such as search and rescue, aviation distress tracking, and emergency signal detection. Conventional RDF techniques rely on manual interpretation or mechanically complex systems, which may be slow or prone to interference. The mechanism addresses these challenges by utilizing phased-array antennas, software-defined radio (SDR) technology, and digital signal processing (DSP) to compute signal direction with high precision and real-time adaptability.

The mechanism supports multi-frequency operation, allowing seamless tracking of emergency beacons on 406 MHz for GPS-based detection and 121.5 MHz for homing signals. By dynamically adjusting frequency parameters, the system enhances operational efficiency in real-world scenarios. Additionally, the software-defined architecture enables flexible signal processing, reducing the need for specialized hardware modifications. Further, the mechanism incorporates an interactive user interface with graphical indicators, numerical readouts, and synchronized auditory feedback, allowing users to track signals efficiently. The real-time visualization improves situational awareness and response time, particularly in low-visibility conditions or hands-free applications.

Overall, the mechanism significantly improves RF signal detection, tracking accuracy, and usability, making it ideal for search and rescue, aviation distress tracking, and emergency response applications.

While embodiments of the present disclosure have been illustrated and described, it will be clear that the disclosure is not limited to these embodiments only. Numerous modifications, changes, variations, substitutions, and equivalents will be apparent to those skilled in the art, without departing from the spirit and scope of the disclosure, as described in the claims.

It should be apparent to those skilled in the art that many more modifications besides those already described are possible without departing from the inventive concepts herein. The inventive subject matter, therefore, is not to be restricted except in the spirit of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

While the foregoing describes various embodiments of the disclosure, other and further embodiments of the disclosure may be devised without departing from the basic scope thereof. The scope of the disclosure is determined by the claims that follow. The disclosure is not limited to the described embodiments, versions, or examples, which are included to enable a person having ordinary skill in the art to make and use the disclosure when combined with information and knowledge available to the person having ordinary skill in the art.

While embodiments of the present disclosure have been illustrated and described, it will be clear that the disclosure is not limited to these embodiments only. Numerous modifications, changes, variations, substitutions, and equivalents will be apparent to those skilled in the art, without departing from the spirit and scope of the disclosure, as described in the claims.

While the foregoing describes various embodiments of the disclosure, other and further embodiments of the disclosure may be devised without departing from the basic scope thereof. The scope of the disclosure is determined by the claims that follow. The disclosure is not limited to the described embodiments, versions, or examples, which are included to enable a person having ordinary skill in the art to make and use the disclosure when combined with information and knowledge available to the person having ordinary skill in the art.

## Claims

1. A system (106) for determining the direction of a Radio Frequency, RF, signal, the system (106) comprising:
a receiver module (210) to receive RF signals (102) from multiple directions via a plurality of phased array antennas;
a computing module (216) adapted to:
compute magnitude data from extracted signal characteristics of the received RF signals (102) for signal strength evaluation; and
compute phase-aligned signal characteristics data from the extracted signal characteristics based on time delays to determine phased signal alignment for direction estimation;
a signal direction computation module (218) adapted to determine a signal direction vector of strongest received signal by identifying peak signal strength patterns using the computed magnitude data and phase-aligned signal characteristics data; and
a rendering module (220) to render the computed signal direction vector on a user device (108) to indicate the direction of the strongest received RF signal.

2. A system (106) according to claim 1, further comprising a digitization module (212) to convert the received RF signals (102) into In-phase, I, and Quadrature, Q, representation, and a decoding module (214) to decode the IQ representation to extract signal characteristics, comprising frequency, modulation properties, and audio characteristics.

3. A system (106) according to claim 2, wherein the received RF signals are converted into IQ representation using an Analog-to-Digital Converter, ADC.

4. A system (106) according to claim 2 or claim 3, wherein the IQ representation is decoded using open-source Software-Defined Radio, SDR, software to generate an audio output and a digital signal strength readout.

5. A system (106) according to any preceding claim, wherein the time delay is determined by comparing phase-aligned signals from antennas positioned at fixed distances from each other.

6. A system (106) according to any preceding claim, wherein the total signal strength is computed by combining signals received via plurality of antennas positioned at a fixed distance apart.

7. A system (106) according to any preceding claim, wherein the signal direction vector is displayed in a format comprising at least one: auditory output, numerical coordinates, a graphical directional arrow, or an augmented reality overlay.

8. A system (106) according to any preceding claim, wherein the received RF signals are processed by synchronizing signals from opposite antennas to enhance signal magnitude.

9. A system (106) according to any preceding claim, wherein the strongest signal direction is determined by identifying peak signal strength patterns corresponding to the loudest audio output.

10. A system (106) according to any preceding claim, wherein a USB hub is used to accommodate multiple SDR receivers, enabling simultaneous processing of signals from different antennas.

11. A method (400) for determining the direction of a radio frequency signal, the method comprising:
receiving (404) Radio Frequency, RF, signals from multiple directions via a plurality of phased array antennas;
converting (406) the received RF signals into In-phase, I, and Quadrature, Q, representation, optionally using and Analog-to-Digital Converter, ADC;
decoding (408) the IQ representation to extract signal characteristics, comprising frequency, modulation properties, and audio characteristics;
computing (410) magnitude data from the extracted signal characteristics for signal strength evaluation;
computing (412) phase data from the extracted signal characteristics based on time delays to determine phased signal alignment for direction estimation, wherein each time delay is optionally determined by comparing phase-aligned signals from antennas positioned at fixed distances from each other;
determining (414) signal direction vector of strongest received signal by identifying peak signal strength patterns using the computed magnitude data and phase-aligned signal characteristics data;
rendering (418) the computed signal direction vector on a user device to indicate the direction of the strongest received RF signal, wherein the signal direction vector is optionally displayed in a format comprising at least one: auditory output, numerical coordinates, a graphical directional arrow, or an augmented reality overlay.

12. A method according to claim 11, wherein the IQ representation is decoded using open-source software-defined radio, SDR, software to generate an audio output and a digital signal strength readout.

13. A method according to claim 11 or claim 12, wherein the total signal strength is computed by combining signals received via plurality of antennas positioned at a fixed distance apart.

14. A method according to any of claims 11 to 13, wherein the received RF signals are processed by synchronizing signals from opposite antennas to enhance signal magnitude.

15. A method according to any of claims 11 to 14, wherein the strongest signal direction is determined by identifying peak signal strength patterns corresponding to the loudest audio output.
